# EUROPEAN PATENT SPECIFICATION

(11) **EP 2 369 264 B1**
(45) Date of publication and mention of the grant of the patent: **05.06.2013**
(21) Application number: 11157987.6
(22) Date of filing: 13.03.2011
(51) Int. Cl.: F24J 2/46, F24J 2/52, E04D 1/36, E04D 3/366, E04D 3/38

(54) **Protecting cover**
Schutzabdeckung
Couverture de protection

(43) Date of publication of application: 28.09.2011
(73) Proprietor: Fakro PP Spolka Z O.O., 33-300 Nowy Sacz (PL)
(72) Inventor: Florek, Tomasz, 33-300 Nowy Sacz (PL)

(56) References cited:
- EP-A2- 1 775 777
- WO-A2-2004/079775
- DE-A1-102006 025 036
- GB-A- 1 061 055

## Description

The subject of this invention is a protecting cover covering, totally or partially, free space between two adjacent parallel sides of spatial structures installed on roofs, and especially solar panels. An additional function of the cover is sealing and securing of installation elements against atmospheric conditions.

DE 10 2006 025 036 discloses an arrangement for joininig two adjacent solar panels which has a threaded bush, a fixing bolt that can be screwed into it with a holding section for fixing in the T-shaped groove and a holding part with at least one literally protruding holding section for fixing onto panels. The threaded fixing bolt is arranged with its holding section in the groove and is screwed into it the mounting position. The usage of the arrangement requires to use additional tools such as allen key since there is used a threaded bush.

DE 102006 025036 discloses the preamble of claim 1.

On the market there is also known a solution of a cover used to secure the slot between two solar panels located next to each other, with the cross section in the shape of letter K formed from thin sheet metal, where oblique profile arms are tilted inside during assembly in order to enable sliding of the cover into the slot between panels. However, in the event of using a suitably thin sheet metal, such solution does not ensure sufficiently strong pressure of the oblique arms on lateral surfaces of solar panels. In case of mounting panels on inclined roofs, it may lead to the situation in which the cover comes out, both during assembly and during operation, posing a risk to persons and other items located potentially under the roof eaves. Elastic arms, whose taks is to ensure durable cover fixing, are not a reliable fixing element, especiallly in case of assembly of e.g. solar panels at a large angle to the horizon, for istance, on step roof. This solution is missing a securing element, which would ensure that the protective cover would stay in the mounted position.

The object of the invention is to provide a cover preventing its accidental pullout after it has been mounted in the slot between two adjacent, generally parallel, sides of spatial structure mounted on the roof. The cover made of one pass of sheet metal is fixed by means of elastic arms made by suitable forming of an additional surface of sheet metal that the cover is made of, slid into the space being covered. After mounting, the arms, using natural elasticity of sheet metal, exert pressure on lateral surfaces of adjacent structures, causing in this way friction force counteracting the forces causing pulling out of the cover.

Elastic arms, as itself, whose task is to ensure durable cover fixing, are not a reliable fixing element, especially in case of assembly of e.g. solar panels at a large angle to the horizon, for instance, on steep roofs. Therefore the solution being presented prevents such risks and secures the cover against accidental pullout.

According to the invention the cover structure is securing it completely against accidental pullout, thanks to applying a spacing bolt mounted in especially formed guides. The spacing bolt, with the maximum length not exceeding the cover length, is a separate element fixed manually or by means of a light hammer for sheet metal, after the cover is set in the target position.

When applying a spacing bolt option with the length much smaller than the cover length, one can assemble two spacing bolts in one set, on both cover ends, respectively. Guides are formed suitably on the ends of elastic arms, along the cover profile. The width of the cover and of the spacing bolt depends on the width of the slot between adjacent structures. The width of the spacing bolt should be carefully selected in order to ensure sufficiently strong pressure of elastic arms on adjacent structures, not causing at the same time permanent deformation of elastic arms.

The guides should ensure free sliding in of the spacing bolt, which can be a flat element, preferably made of the same sheet metal as the cover. Such conditions are met by guides made by performing a single bend on free ends of the elastic arms. The bend towards the symmetry axis by the angle securing against lateral movement of the spacing bolt in each position of the arms forms angular guides enabling spacing bolt movement solely in the longitudinal direction.

In order to ensure broad tolerance of the width of the slot being covered, the cover should be made in the shape of letter K, in which elastic arms are formed obliquely to the covering surface, and thus also to the surface of adjacent structures. Such shape of the elastic arms gives at least two benefits. One of them is higher tolerance to the change of slot width. The other advantage of the solution in question, not less important, is additional pressure of the covering surface after mounting of the bolt in the guides. The condition for creating such a phenomenon is ensuring a longer distance between the covering surface and the guides from the thickness of the structure being covered.

By pressing guides from the inside, the spacing bolt causes tensile force carried through elastic arms to the covering surface, contributing to better pressure to the surface of adjacent structures and thus increasing its tightness. The spacing bolt, in the part entering the guides, is in the shape of a wedge making it easier to slide it in and stretch the guides.

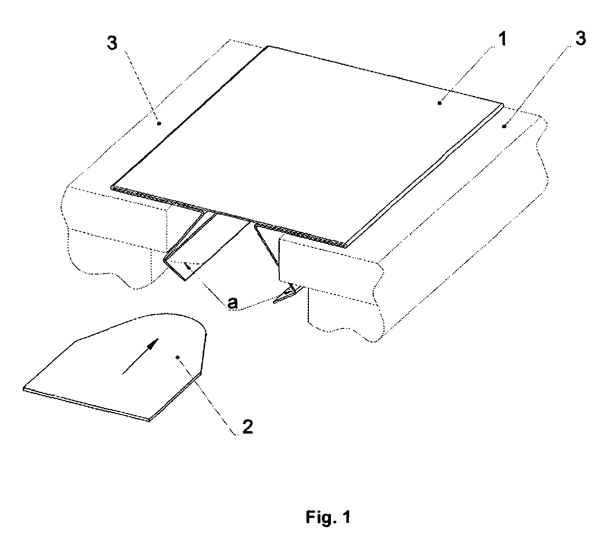

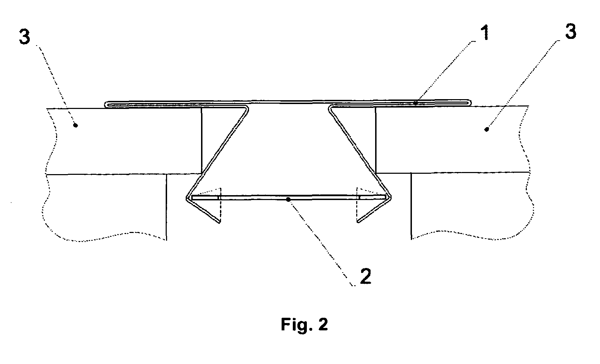

The isometric view of one end of the cover and the spacing bolt set mounted in the slot between the sides of spatial structures is shown in fig. 1. The lateral view of the mounted set is shown in fig. 2. An exemplary shape of the cover, resembling letter K, is shown in fig. 3, whereas a possible way of mounting it is shown in fig. 4. An exemplary shape of the spacing bolt is shown in fig. 5.

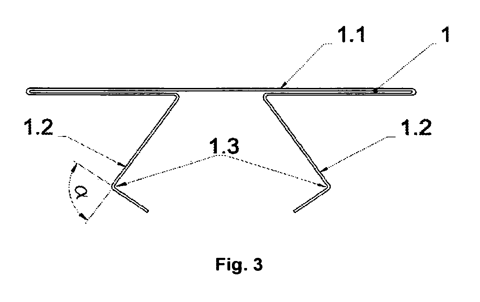

A complete covering set, in the presented embodiment, consists of the cover 1 and the spacing bolt 2. The whole set is fixed in the slot between adjacent spatial structures 3 mounted most frequently on the roof, whereas the length of the cover, depending on the needs, may be either equal to the length of the slot between the spatial structures or smaller. The cover 1 is made of one pass of sheet metal. By bending along suitable edges one gets a shape similar to letter K, shown in fig. 3.

Fully formed cover consists of the covering surface 1.1, elastic arms 1.2, on the ends of which guides are formed in a suitable way 1.3. In case of applying a spacing bolt 2 in the form of a flat element made of sheet metal, guides 1.3 may be made suitable in the form of an angular section, whereas the re-entrant angle α between section arms towards the symmetry axis has to guarantee protection against lateral movement of the spacing bolt 2 in each position of the arms, enabling, at the same time, movement of the spacing bolt 2 in the longitudinal movement of the guides 1.3.

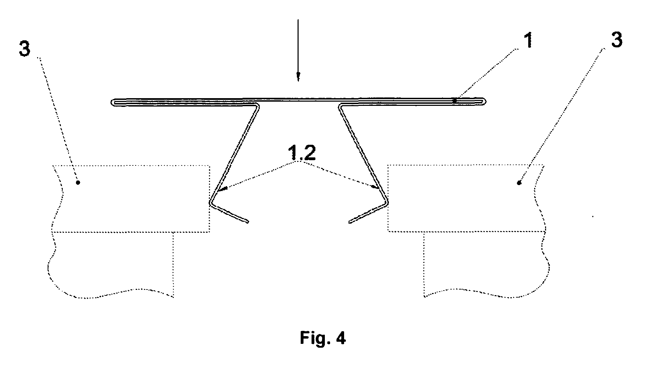

As shown in fig. 4, the cover is mounted most frequently by sliding it into the slot using a possibility of elastic deformation of the arms 1.2. After mounting, the arms 1.2, using natural tensile force of sheet metal, exert pressure on lateral surfaces of the adjacent structures 2, causing friction force counteracting forces causing pulling out of the cover 1.

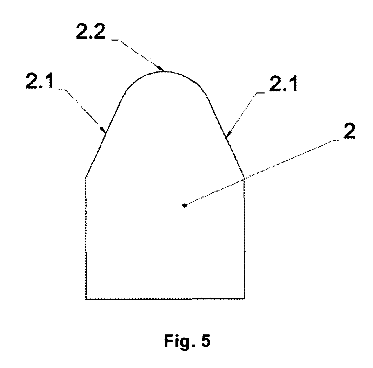

The element that fully protects the cover 1 against accidental pullout is the spacing bolt 2, shown in fig. 5, with the total maximum length not exceeding the length of the cover 1. The spacing bolt 2 is fixed manually or by means of a light hammer for sheet metal, after the cover 1 is set in the target position. The spacing bolt, in order to make introduction into the guides 1.3 easier, is partially formed in the shape of a wedge 2.1 making it easier to slide it in and stretch of the guides. Furthermore, the end of the wedge 2.1 should not have sharp edges, which can be ensured by introducing of a rounding 2.2. The width of the cover 1 and of the spacing bolt depends closely on the width of the slot between the adjacent structures 3 and it should ensure sufficient pressure of the elastic arms 1.2 and the covering surface 1.1 on the adjacent structures 3.

After mounting of the spacing bolt 2, one can additionally bend corners of the guides 1.3 inside, along the edge *a* in order to secure the bolt against a possibility of being pulled out by accident.

## Claims

1. Protecting cover made of one pass of sheet metal, used for total or partial covering of the slot between two adjacent spatial structures mounted on roofs, in particular solar panels, having a covering surface and additional elastic arms securing it against being pulled out, owing to the pressure on adjacent lateral surfaces of the structure, the elastic arms (1.2), together with the covering surface (1.1), have the shape of cross-section resembling letter K and in that the elastic arms are additionally stretched by a spacing bolt (2), **characterized in that** the pacing bolt is inserted in guides (1.3) formed on the ends of the elastic arms.

2. Protecting cover, according to claim 1, **characterized in that** the spacing bolt (2) is a separate element mounted after setting of the cover (1) in the target position.

3. Protecting cover, according to claim 1, **characterized in that** has guides (1.3) for the spacing bolt (2), shaped on free edges of the elastic arms (1.2).

4. Protecting cover, according to claim 3, **characterized in that** the guides (1.3) are angle sections with a re-entrant angle pointing to the centre of symmetry of the cover, in which one arm of the angle section is an elastic arm of the cover.

5. Protecting cover, according to claim 3, **characterized in that** the distance between the covering surface (1.1) and the guides (1.3) is longer than the thickness of the structure being covered (3).

6. Protecting cover, according to claim 2, **characterized in that** the spacing bolt (2) in the part entering the guides (1.3), is in the shape of a wedge (2.1) making it easier to slide it in and stretch the guides.

7. Protecting cover, according to claim 2, **characterized in that** the maximum length of the spacing bolt (2) does not exceed the length of cover (1) cooperating with it.

## Patentansprüche

1. Die überdeckende Auflage, die aus einem Blechschnitt angefertigt ist und zum vollständigen oder teilweisen Bedecken des Spalts zwischen zwei benachbarten räumlichen Konstruktionen dient, die auf Dächern montiert werden, besonders geeignet für Solarpaneele; sie verfügt über eine überdeckende Fläche und zusätzliche federnde Arme, durch die sie vor dem Ausschieben durch den Druck auf die Seitenflächen der benachbarten Konstruktionen geschützt wird; die federnden Arme /1.2/ haben zusammen mit der überdeckenden Fläche (1.1) einen Querschnitt, dessen Form dem Buchstaben K gleicht und werden zusätzlich durch einen Spreizriegel /2/ gespreizt, sie zeichnet sich dadurch aus, dass der Spreizriegel /2/ in Führungsleisten (1.3) angebracht ist, die an den Enden der federnden Arme gestaltet sind.

2. Die überdeckende Auflage gemäß Anspruch 1, zeichnet sich dadurch aus, dass der Spreizriegel /2/ ein separates Element ist, das nach dem Setzen der Auflage /1/ in der Zielstellung montiert wird.

3. Die überdeckende Auflage gemäß Anspruch 1, zeichnet sich dadurch aus, dass sie Führungsleisten /1.3/ für den Spreizriegel /2/ hat, die an den freien Kanten der federnden Arme /1.2/ gestaltet sind.

4. Die überdeckende Auflage gemäß Anspruch 3, zeichnet sich dadurch aus, dass die Führungsleisten /1.3/ L-Profile mit konkavem Winkel sind, der zum Symetriezentrum der Auflage gerichtet ist, bei denen der eine Arm des L-Profils der federnde Arm der Auflage ist.

5. Die überdeckende Auflage gemäß Anspruch 3, zeichnet sich dadurch aus, dass die Distanz zwischen der überdeckenden Fläche /1.1/ und den Führungsleisten /1.3/ größer als die Dicke der überdeckten Konstruktion /3/ ist.

6. Die überdeckende Auflage gemäß Anspruch 2, zeichnet sich dadurch aus, dass der Spreizriegel /2/, in dem Teil, der in die Führungsleisten /1.3/ eingeführt wird, in Form eines Keils /2.1/ gestaltet ist, der dessen Einführen und die Spreizung der Führungsleisten erleichtert.

7. Die überdeckende Auflage gemäß Anspruch 2, zeichnet sich dadurch aus, dass die maximale Länge des Spreizriegels /2/ die Länge der mit ihm zusammenarbeitenden Auflage /1/ nicht überschreitet.

## Revendications

1. Couvre-joint fabriqué à partir d'un seul flan de tôle, conçu pour masquer complètement ou partiellement les vides entre deux structures tridimensionnelles en toiture, notamment entre des panneaux solaires, ledit couvre-joint possédant une surface de recouvrement et des bras élastiques supplémentaires qui le protègent contre le glissement par une pression exercée sur les surfaces latérales voisines de la structure, lesdits bras élastiques (1.2) et la surface de recouvrement (1.1), possédant une section en K et étant entretoisés par un verrou d'expansion (2) **caractérisé en ce que** le verrou d'expansion (2) est mis en place dans les dispositifs de guidage (1.3) formés aux extrémités des bras élastiques.

2. Couvre-joint selon la revendication 1, **caractérisé en ce que** le verrou d'expansion (2) est un élément séparé installé après la mise en place du couvre-joint (1) dans la position définitive.

3. Couvre-joint selon la revendication 1, **caractérisé en ce qu'**il possède des dispositifs de guidage (1.3) pour le verrou d'expansion (2), lesdits dispositifs de guidage étant formés aux extrémités libres des bras (1.2).

4. Couvre-joint selon la revendication 3, **caractérisé en ce que** les dispositifs de guidage (1.3) sont des cornières dont l'angle concave est dirigé vers le centre de symétrie du couvre-joint, une aile de lesdites cornières étant un bras élastique du couvre-joint.

5. Couvre-joint selon la revendication 3, **caractérisé en ce que** la distance entre la surface de recouvrement (1.1) et les dispositifs de guidage (1.3) est supérieure à l'épaisseur de la structure à recouvrir (3).

6. Couvre-joint selon la revendication 2, **caractérisé en ce que** le verrou d'expansion (2), dans la partie à introduire dans les dispositifs de guidage (1.3), présente la forme d'un prisme (2.1), ce qui facilite son insertion et l'entretoisement des dispositifs de guidage.

7. Couvre-joint selon la revendication 2, **caractérisé en ce que** la longueur maximale du verrou d'expansion (2) n'excède pas la longueur du couvre-joint (1) associé.
